# EUROPEAN PATENT APPLICATION

(11) **EP 3 863 218 A1**
(43) Date of publication of application: **11.08.2021**
(21) Application number: 19868349.2
(22) Date of filing: 04.10.2019
(51) Int. Cl.: H04L 9/32, G06F 21/44, G06F 21/64, G06Q 20/06, G06Q 20/22

(54) **INFORMATION PROCESSING DEVICE, METHOD AND PROGRAM**

(30) Priority: 05.10.2018 JP 2018190158
(71) Applicant: Sakura Information Systems Co., Ltd., Minato-ku Tokyo 108-0072 (JP)
(72) Inventor: SATO, Hiroyuki, Tokyo 108-0072 (JP); SAKURAGI, Shoichiro, Tokyo 108-0072 (JP); OCHIAI, Mitsuo, Tokyo 108-0072 (JP)
(74) Representative: AWA Sweden AB
(86) International application number: PCT/JP2019/039357
(87) International publication number: WO 2020/071548

(57) **Abstract**

An information processing apparatus (100) according to an embodiment of the present disclosure is mounted on a terminal (10, 30) and includes an access control means (101) and a signature means (103). When a transaction is generated by software that operates on an operating system of the terminal (10, 30), the access control means (101) verifies the software that has generated the transaction. When the access control means (101) determines that the software that has generated the transaction is authorized software, the signature means (103) affixes a digital signature to the transaction using a private key stored in a secure element of the terminal (10, 30).

## Description

### FIELD

The present invention relates generally to an information processing apparatus, method and program.

### BACKGROUND

In virtual currency (also referred to as cryptocurrency) transactions, leakage incidents, such as theft of a virtual currency due to falsification of transaction records by malware or the like have become a social problem. Users have had difficulty in deciding how to store virtual currency in order to prevent such leakage of virtual currency. Storing virtual currency is actually synonymous with managing a private key. The private key is managed by a so-called "wallet".

Types of wallets include a web wallet, a software wallet, a hardware wallet, a paper wallet, and the like. A web wallet manages the private key on a server, using a web service on the server. A software wallet stores the private key in a storage area, such as a hard disk drive (HDD), of a smartphone or personal computer (PC). Since a web wallet and a software wallet both store the private key in a computer, there is a risk of leakage of the private key due to hacking or infection of the computer with malware.

On the other hand, a paper wallet stores the private key on a physical medium, such as paper. Since a paper wallet is physically separated from the network, there is no risk of leakage via the network. However, the processing at the time of using virtual currency becomes complicated, which causes inconvenience. In addition, the user needs to be careful about where to store the paper wallet itself, which cannot be restored if lost.

In consideration of the risk of leakage and convenience in using virtual currency, the number of users who use a "hardware wallet" is increasing. A hardware wallet is a dongle-type dedicated device configured to store a private key of virtual currency and provided separately from a smartphone or PC, and can be used by being connected to the PC via a universal serial bus (USB). A hardware wallet is said to be securer than a software wallet because the hardware wallet can store the private key physically separately from the network. A hardware wallet is also more convenient than a paper wallet because transaction data (a transaction) can be digitally signed with the dedicated device itself.

### CITATION LIST

### PATENT LITERATURE

[Patent Literature 1] Jpn. Pat. Appln. KOKAI Publication No. 2017-207860

### SUMMARY

### TECHNICAL PROBLEM

However, damage due to malware has also been reported with respect to hardware wallets that were said to be secure, and there is a case where a transaction generated by a PC via software is rewritten by malware. Specifically, the transmission destination address, to which the user wanted to transfer money, is rewritten as an address of the attacker by malware, and an unauthorized transaction unintended by the user is generated. If the user neglects confirmation of the transmission destination address displayed on the hardware wallet, the user unintentionally affixes a digital signature to an unauthorized transaction using a private key, and the unauthorized transaction affixed with the digital signature is transmitted to the network. If an unauthorized transaction is authenticated, virtual currency may be transferred from the user to an account of the attacker; as a result, the virtual currency may be stolen.

The present invention has been made in view of the above-described circumstances, and is intended to provide an information processing apparatus, method, and program capable of further improving the security of transactions.

### SOLUTION TO PROBLEM

An information processing apparatus according to an embodiment of the present disclosure is mounted on a terminal and includes an access control means and a signature means. When a transaction is generated by software that operates on an operating system of the terminal, the access control means verifies the software that has generated the transaction. When the access control means determines that the software that has generated the transaction is authorized software, the signature means affixes a digital signature to the transaction using a private key stored in a secure element of the terminal.

### ADVANTAGEOUS EFFECTS OF INVENTION

An information processing apparatus, method, and program can further improve the safety of transactions.

### BRIEF DESCRIPTION OF THE DRAWINGS

FIG. 1 is a conceptual diagram showing a transaction system including an information processing apparatus according to the present embodiment.
FIG. 2 is a block diagram showing the information processing apparatus according to the present embodiment.
FIG. 3 is a sequence diagram showing an example of installation processing and activation processing (processing of the opening of a new virtual currency account) of a wallet application (software for using virtual currency) according to the present embodiment.
FIG. 4 is a sequence diagram showing an example of a case where a virtual currency account is opened using an authorized wallet application according to the present embodiment.
FIG. 5 is a sequence diagram showing an example of a case where a virtual currency transaction is conducted using an authorized wallet application according to the present embodiment.
FIG. 6 is a sequence diagram showing an example of a case where a virtual currency account is opened or a virtual currency transaction is conducted by a wallet application that is not an authorized wallet application.
FIG. 7 is a flowchart showing details of verification processing of an authorized wallet application according to the present embodiment.
FIG. 8 is a display example of a message by a presentation unit according to the present embodiment.
FIG. 9 is a block diagram showing an apparatus configuration example of the information processing apparatus according to the present embodiment.

### DETAILED DESCRIPTION

Hereinafter, an information processing apparatus, method, and program according to an embodiment of the present invention will be described in detail with reference to the accompanying drawings. In the following embodiment, elements denoted by the same reference numeral perform similar operations, and redundant descriptions will be omitted.

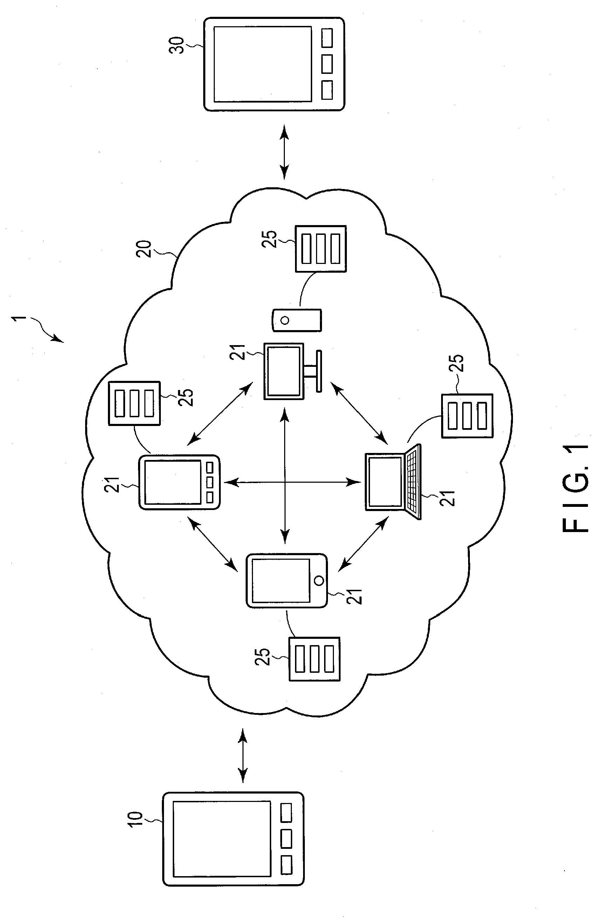

A system for a transaction of virtual currency (also referred to as cryptocurrency) by the information processing apparatus according to the present embodiment will be described with reference to FIG. 1. In the present embodiment, bitcoin (registered trademark) is assumed as the virtual currency used for the transaction. The type of virtual currency is not limited to bitcoin, and may be another type of virtual currency, a transaction of which is performed by storing a private key and digitally signing the transaction with the private key, i.e., altcoin. In addition, the information processing apparatus according to the present embodiment can be similarly applied to any system that requires storage of a private key, such as a system for a transaction using a smart contract (a relationship between a contract and execution of the contract) using Ethereum or the like.

A transaction system 1 shown in FIG. 1 includes a terminal 10 and a terminal 30, each of which includes the information processing apparatus according to the present embodiment, and a blockchain network 20. FIG. 1 shows an example in which virtual currency is transferred from the terminal 10, which is operated by a user, to the terminal 30, which is a remittance destination, via the blockchain network 20.

Since the terminal 10 and the terminal 30 have similar configurations, the configuration of the terminal 10 will be representatively described below. For convenience of description, the terminal 10 and the terminal 30 are described separately from the blockchain network 20, but the terminal 10 and the terminal 30 also constitute the blockchain network 20.

The terminal 10 is a communication terminal including a subscriber identity module (SIM), and is assumed to be, for example, a mobile phone such as a feature phone or a smartphone, a tablet terminal, or a tablet PC. The terminal 10 includes an information processing apparatus 100 according to the present embodiment.

The blockchain network 20 is a peer-to-peer (P2P) network using blockchain technology, in which communication media 21 participating in the network are connected to each other as nodes. Unlike centralized networks, the P2P network has no server and no hierarchical structure, and has a configuration in which basically all nodes are connected in a "flat" state so as to share the load related to processing of services. The communication media 21 participating in the blockchain network 20 are various communication media capable of communicating via a network, including a mobile phone such as a smartphone, a tablet PC, a notebook PC, and a desktop PC. The P2P network is constructed by such communication media 21. Each communication medium 21 has a public ledger 25 in which transactions related to virtual currency conducted so far have been captured.

Each public ledger 25 is data used in blockchain technology, in which transactions of bitcoin conducted so far are recorded. A transaction is newly captured in a block in a public ledger 25 by the mechanism of Proof of Work, and is shared by the public ledgers 25. The blockchain technology in the present embodiment is assumed to be processing used in a general transaction of bitcoin, and thus a description thereof will be omitted herein.

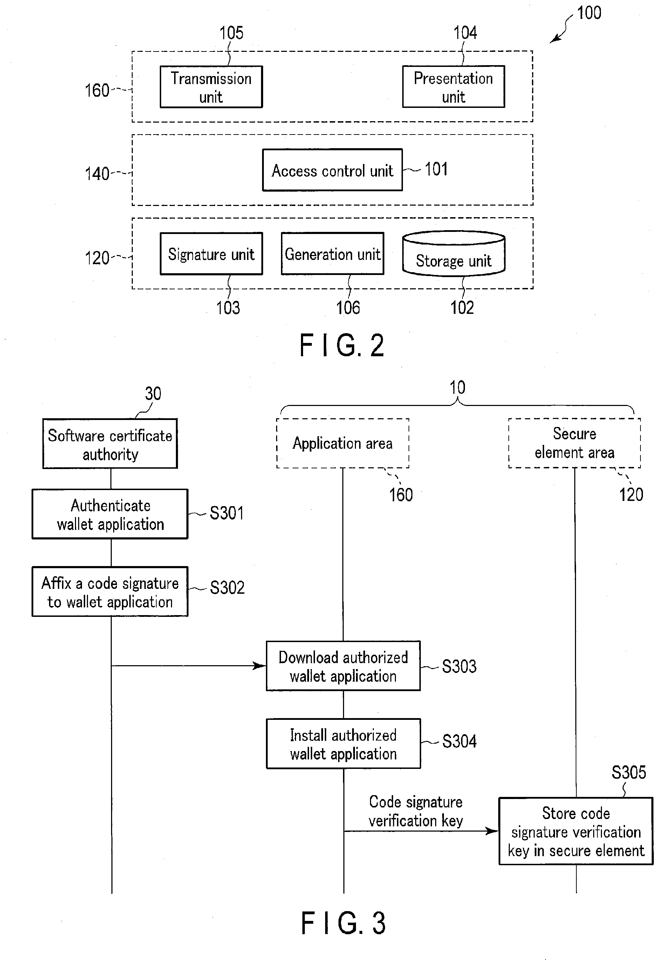

Next, the information processing apparatus 100 according to the present embodiment will be described with reference to the block diagram of FIG. 2.

Let us assume that the information processing apparatus 100 according to the present embodiment is implemented by mutual cooperation between a secure element area 120, an operating system (OS) area 140, and an - application area 160, which are the architecture of the terminal 10.

The information processing apparatus 100 according to the present embodiment includes an access control unit 101, a storage unit 102, a signature unit 103, a presentation unit 104, a transmission unit 105, and a generation unit 106.

The secure element area 120 is a software area included in a secure element which is tamper-resistant hardware, such as a SIM, a universal SIM (USIM), or an embedded SIM (eSIM). The secure element area 120 includes the storage unit 102, the signature unit 103, and the generation unit 106.

The OS area 140 is an area in which a general OS for operating the system operates; in the present embodiment, it is assumed that, for example, an Android (registered trademark) OS operates. The OS area 140 includes the access control unit 101.

The application area 160 is an area in which software (an application such as an Android application) used by the user operates via the function of the OS. In the present embodiment, it is assumed that a wallet application, which is software for using virtual currency, operates in the application area 160. The application area 160 includes the presentation unit 104 and the transmission unit 105.

The access control unit 101, the signature unit 103, the presentation unit 104, the transmission unit 105, and the generation unit 106 may be implemented by one processing circuitry. Alternatively, the access control unit 101, the presentation unit 104, and the transmission unit 105 may be implemented by one processing circuitry, and the signature unit 103 and the generation unit 106 may be implemented by another processing circuitry. Furthermore, each unit (each of the access control unit 101, the signature unit 103, the presentation unit 104, the transmission unit 105, and the generation unit 106) may be constituted by an application specific integrated circuit (ASIC), a field programmable gate array (FPGA), or the like.

When a transaction is generated by software operating on the OS of the terminal 10, the access control unit 101 verifies the software that has generated the transaction and determines whether or not the software is software authorized by a certificate authority. The transaction is transaction data related to a virtual currency transaction, and specifically includes a virtual currency address, a virtual currency remittance amount, and the like. The access control unit 101 accesses the secure element area 120 when determining that the software that has generated the transaction is authorized software. For example, the access control unit 101 instructs the secure element to affix a digital signature to the transaction.

On the other hand, when the software that has generated the transaction is not authorized software, the access control unit 101 stops processing related to the transaction, such as access to the secure element and affixation of a digital signature.

The storage unit 102 stores a signature verification key and a private key in the secure element. The signature verification key is a key for verifying whether or not software that has generated a transaction is reliable software. The private key is generated by the generation unit 106 when a virtual currency account is opened, and enables virtual currency transactions. That is, it is assumed that the information processing apparatus 100 uses the secure element as a wallet of the private key.

When it is determined by the verification by the access control unit 101 that the software that has generated the transaction is authorized software, the signature unit 103 affixes a digital signature to the transaction using the private key stored in the storage unit 102 of the secure element area 120.

The presentation unit 104 presents details about the transaction affixed with the digital signature on, for example, a display of the terminal 10.

The transmission unit 105 broadcasts the transaction affixed with the digital signature to the blockchain network 20.

The generation unit 106 generates a pair of the private key and a public key when the virtual currency account is opened.

The architecture of the terminal 10 is not limited to the above-described architecture, and each unit may be in any area in the architecture configuration as long as at least the private key is stored in the storage unit 102 in the secure element area 120 and the private key in the storage unit 102 can be accessed only upon authentication by the access control unit 101.

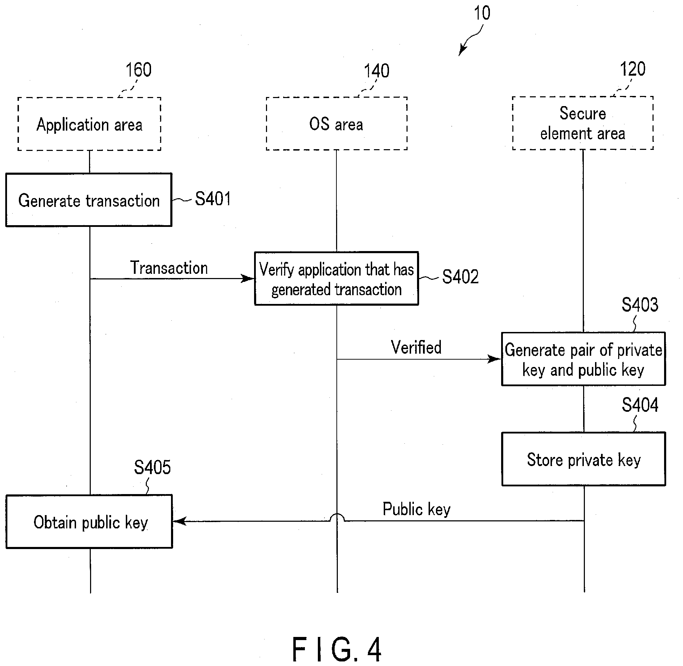

Next, installation processing and activation processing (virtual currency account opening processing) of a virtual currency wallet application (software for using virtual currency) that can be used by using the information processing apparatus 100 according to the present embodiment will be described with reference to the sequence diagrams of FIGS. 3 and 4.

FIG. 3 is a sequence diagram showing exchanges between a software certificate authority 50 and the terminal 10 in time series. For the terminal 10, processing in the secure element area 120 and the application area 160 is shown in time series in more detail.

The software certificate authority is an authority that issues a digital certificate that certifies the authenticity of submitted software.

The terminal 10, which includes the information processing apparatus 100 according to the present embodiment, is a communication terminal using an Android OS (registered trademark).

In step S301, the software certificate authority 50 authenticates a wallet application. Specifically, the software certificate authority 50 authenticates whether or not the submitted wallet application is an unauthorized application or includes a malicious program, before the wallet application is used in the terminal 10. Since a general method may be applied to the authentication in the software certificate authority 50, a detailed description thereof will be omitted herein.

In step S302, when the software certificate authority 50 authenticates that there is no problem because the wallet application is not an unauthorized application and does not include any malicious programs, the software certificate authority 50 provides the wallet application with a code signature as evidence that the wallet application has been authorized. The wallet application is then published on the web, for example on Google Play (registered trademark), so that it can be downloaded on the terminal 10. The authorized wallet application (legitimate wallet application) is referred to as an "authorized wallet application".

In step S303, the terminal 10 downloads the authorized wallet application from the software certificate authority 50. At this time, a code signature verification key for verifying the code signature provided to the authorized wallet application is also downloaded. Here, the code signature verification key is assumed to be a public-key-cryptosystem public key.

In step S304, the terminal 10 installs the authorized wallet application.

In step S305, when the wallet application is installed in the terminal 10, the storage unit 102 of the secure element area 120 receives and stores the code signature verification key from the application area 160. When the installation of the authorized wallet application is completed, the authorized wallet application becomes operable in the application area 160.

Through the above-described processing, the authorized wallet application becomes operable in the terminal 10; however, if the terminal 10 does not own a virtual currency account corresponding to the authorized wallet application, virtual currency cannot be received or transmitted; therefore, an account needs to be newly opened.

Next, the case where a virtual currency account is opened in the terminal 10 using a wallet application will be described with reference to the sequence in FIG. 4.

In step S401, the authorized wallet application in the application area 160 generates a transaction that indicates an instruction to generate a virtual currency account, in response to a user's operation.

In step S402, the access control unit 101 in the OS area 140 receives the transaction from the authorized wallet application. The access control unit 101 uses the code signature verification key stored in the secure element area 120 to verify the wallet application that has generated the transaction. This is because verification processing needs to be performed on any wallet application since the information processing apparatus 100 according to the present embodiment does not know in advance whether the wallet application is an authorized wallet application or an unauthorized wallet application.

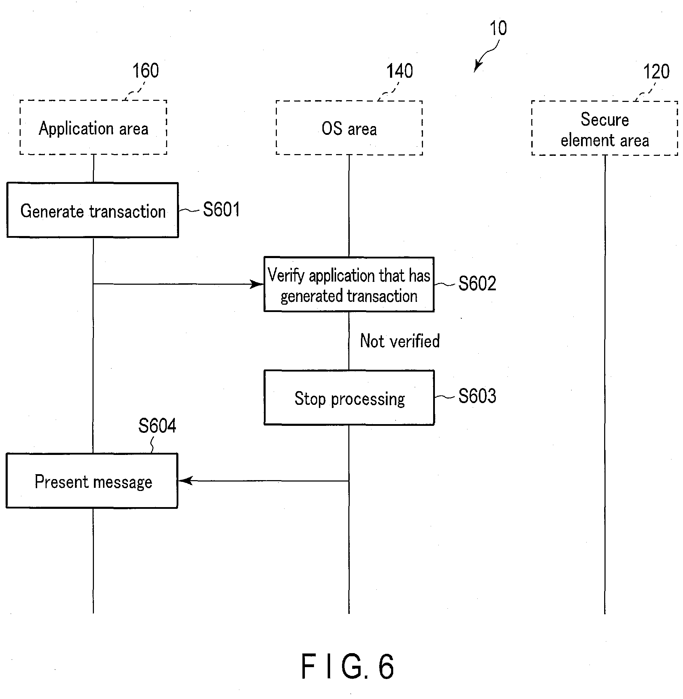

Specifically, it is determined whether or not the wallet application that has generated the transaction is the authorized wallet application. A detailed verification method will be described later with reference to FIG. 6. In FIG. 4, as a result of the verification, it is determined that the wallet application that has generated the transaction is the authorized wallet application. The transaction generated by the authorized wallet application is a legitimate transaction ("Verified" in FIG. 4).

In step S403, the generation unit 106 in the secure element area 120 receives a notification that the transaction is a legitimate transaction from the access control unit 101, and generates a pair of a private key and a public key.

In step S404, the storage unit 102 in the secure element area 120 stores the private key generated in step S403.

In step S405, the authorized wallet application in the application area 160 receives the public key from the secure element area 120. Accordingly, a virtual currency address can be generated using the public key, and virtual currency transactions are enabled. The installation processing and activation processing of the authorized wallet application are thereby completed.

In the present embodiment, descriptions are provided assuming one type of virtual currency such as bitcoin; however, other types of virtual currency can also be managed by the same wallet by similarly opening an account for each type of virtual currency. Specifically, the generation unit 106 may generate a pair of a public key and a private key for each type of virtual currency, and the storage unit 102 may store the private key separately for each type of virtual currency.

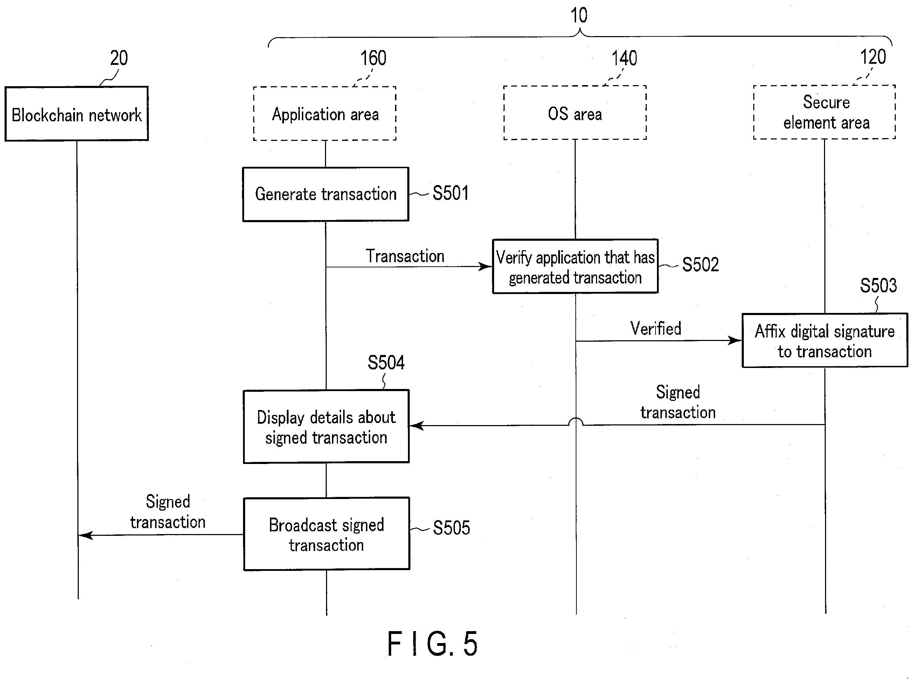

Next, a sequence in the case where a virtual currency transaction is conducted using an authorized wallet application will be described with reference to FIG. 5. Here, it is assumed that virtual currency is transferred from the terminal 10 to an account of another terminal 30.

In step S501, the user generates a transaction related to a virtual currency transfer via the authorized wallet application.

In step S502, the access control unit 101 in the OS area 140 receives the transaction from the authorized wallet application. The access control unit 101 uses the code signature verification key stored in the secure element area 120 to verify the wallet application that has generated the transaction. Here, as a result of the verification, it is determined that the wallet application that has generated the transaction is the authorized wallet application. As in the case of FIG. 4, the transaction generated in step S501 is a legitimate transaction ("Verified" in FIG. 5).

In step S503, the signature unit 103 in the secure element area 120 receives the transaction from the access control unit 101. The signature unit 103 affixes a digital signature to the transaction with a private key stored in the storage unit 102.

In step S504, the presentation unit 104 in the application area 160 receives the transaction affixed with the digital signature from the secure element area 120. The presentation unit 104 causes the display to display details about the transaction affixed with the digital signature. The user confirms the details of the transaction displayed on the display of the terminal 10, and provides an approval when there is no problem with the details. The approval may be provided by a general method of acquiring an action from the user, such as acquiring an action through a user's touching or pressing a confirmation button or through voice recognition processing on a user's utterance of "OK".

In step S505, the transmission unit 105 in the application area 160 broadcasts the signed transaction to the blockchain network 20.

In the blockchain network 20, the transaction is completed by being captured in a block and added to the blockchains of the public ledgers. The transaction processing in the blockchain network is general transaction processing for bitcoin, and a description thereof will be omitted herein.

On the other hand, a sequence of the case where a virtual currency account is opened or a virtual currency transaction is conducted by a wallet application that is not the authorized wallet application will be described with reference to FIG. 6.

In step S601, the user generates a transaction related to opening of a virtual currency account or to a virtual currency transfer via the wallet application.

In step S602, the access control unit 101 in the OS area 140 receives the transaction from the wallet application. The access control unit 101 uses the code signature verification key stored in the secure element area 120 to verify the wallet application that has generated the transaction. Here, as a result of the verification, it is determined that the wallet application that has generated the transaction is not the authorized wallet application ("Not verified" in FIG. 6).

In step S603, the access control unit 101 in the OS area 140 stops processing of the transaction while determining that the transaction may have been falsified on the grounds that the transaction generated in step S601 is not a transaction generated by the authorized wallet application.

In step S604, the presentation unit 104 in the application area 160 presents to the user a message indicating that the processing of the transaction has been stopped, as needed.

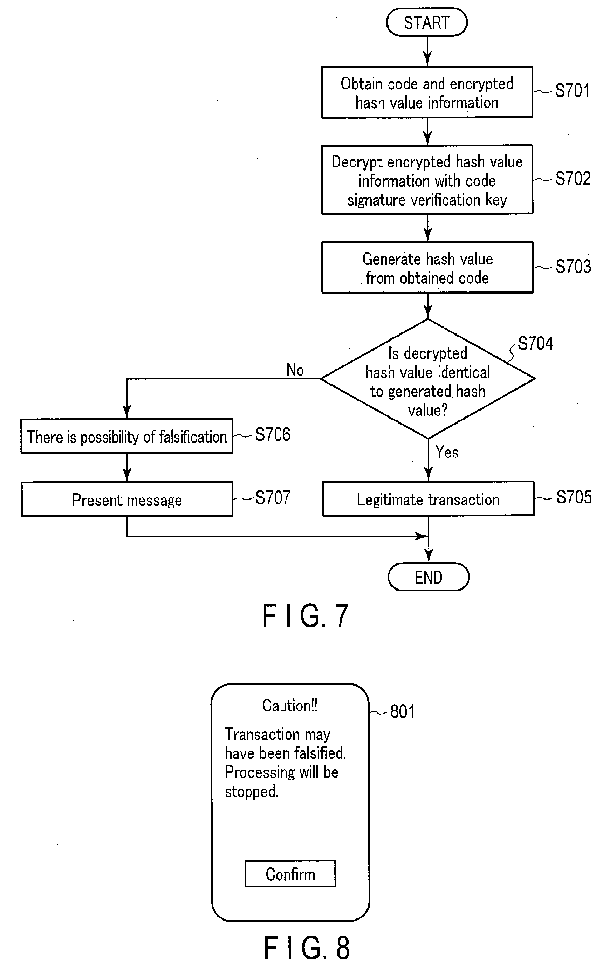

Next, details of the wallet application verification processing by the access control unit 101 in step S402, step S502, and step S602 will be described with reference to the flowchart in FIG. 7.

In step S701, the access control unit 101 acquires the code signature affixed to the wallet application, that is, a code and hash value information encrypted with a private key of the software certificate authority.

In step S702, the access control unit 101 extracts the code signature verification key from the storage unit, decrypts the encrypted hash value information with the code signature verification key, and generates a decrypted hash value.

In step S703, the access control unit 101 generates a hash value from the code received in step S701 using a hash function.

In step S704, the access control unit 101 compares the decrypted hash value with the hash value generated in step S503 to determine whether or not they are identical to each other. If they are identical, the processing proceeds to step S705, and if they are not identical, the processing proceeds to step S706.

In step S705, as the hash values are identical, it is determined that the wallet application is the authorized wallet application, and that the transaction generated by the authorized wallet application is a legitimate transaction.

In step S706, the access control unit 101 can determine that the wallet application is an unauthorized wallet application that is not the authorized wallet application, and that the transaction generated by the unauthorized wallet application is unreliable and may have been falsified by malware.

As shown in step S707, when it is determined that the transaction may have been falsified, the presentation unit 104 may present a message indicating that there is a possibility of falsification on a screen of the display or the like. Alternatively, instead of the screen display, a message indicating that there is a possibility of falsification may be presented by a voice prompt or an alert sound. A message may be presented by a combination of screen display and voice.

FIG. 8 shows a display example of the message by the presentation unit 104.

FIG. 8 is an example of a display screen 801 on the display of the terminal. Text indicating that processing of the transaction has been stopped is presented as well as a confirmation screen.

Alternatively, before details about a transaction are displayed on the display, whether or not the wallet application used to display the details is the authorized wallet application may be verified. Specifically, the access control unit 101 verifies whether or not the wallet application used to display details about a transaction is the authorized wallet application, using the code signature verification key. If it is determined that the wallet application is the authorized wallet application, the details of the transaction affixed with a digital signature are displayed.

On the other hand, if it is determined that the wallet application is not the authorized wallet application, the details to be displayed may not be details about a transaction affixed with a digital signature, and thus display of the details about the transaction is stopped.

Alternatively, the access control unit 101 may verify whether or not details about a transaction to be presented by the presentation unit are details about a transaction affixed with a digital signature.

Alternatively, at the stage of digitally signing a transaction, existing biometric authentication may be requested of the user in order to further improve security strength. Examples of the biometric authentication include fingerprint authentication, face authentication, iris authentication, vein authentication, voiceprint authentication, and auricle authentication.

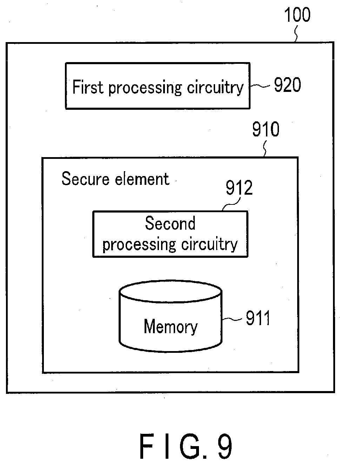

Next, an apparatus configuration example of the information processing apparatus 100 according to the present embodiment will be described with reference to a block diagram of FIG. 9.

Assuming that the information processing apparatus 100 is configured as a single unit, the information processing apparatus 100 includes a secure element 910 and first processing circuitry 920. The secure element 910 includes a memory 911 and second processing circuitry 912.

The first processing circuitry 920 is, for example, a central processing unit (CPU), generates a transaction by executing software that operates on an operating system, and determines whether or not the software is authorized software in response to the generation of the transaction. The first processing circuitry 920 is not limited to a CPU, and may be constituted by an integrated circuit such as an application specific integrated circuit (ASIC) or a field programmable gate array (FPGA).

The memory 911 is, for example, a random access memory (RAM), a dynamic RAM (DRAM), or a static RAM (SRAM), and stores a private key related to use of virtual currency.

The second processing circuitry 912 is, for example, an ASIC or an FPGA, and affixes a digital signature to a transaction using the private key when it is determined that the software is authorized software.

According to the present embodiment described above, only a transaction generated by a software wallet authorized by the software certificate authority is digitally signed using a private key stored in a wallet of a secure element, and processing of a falsified transaction or a transaction generated by unauthorized software including malware can be stopped before a digital signature is affixed to the transaction.

Therefore, it is possible to eliminate the possibility of erroneous approval of a transaction that occurs in a dongle-type hardware wallet due to the PC being infected with malware and the transaction being rewritten. Furthermore, the information processing apparatus according to the present embodiment does not need to use a separate dedicated device such as a dongle, and can be implemented with a mobile terminal only. This can greatly improve convenience.

In addition, in the existing hardware wallet, details about a transaction are displayed on a display unit of a dongle connected by USB. The display unit of the dongle is smaller and has lower viewability than the display of the PC; therefore, even if remittance details such as a remittance destination or a remittance amount have been falsified, the user may transfer virtual currency without noticing the falsification due to misreading or oversight. On the other hand, according to the information processing apparatus of the present embodiment, verification is executed when details of a transaction affixed with a digital signature are displayed, as in a case when the transaction is generated; therefore, only details of a legitimate transaction are displayed, whereas details of an unauthorized transaction are not displayed, which allows the user to execute a transaction without anxiety.

The instructions shown in the processing sequence in the above-described embodiment may be executed based on a software program. The same effect as that of the above-described detection apparatus may be obtained by storing the program in a general-purpose computer system in advance, and then reading the program. The instruction described in the above-mentioned embodiment may be recorded as a computer-executable program in a magnetic disk (flexible disk, hard disk, etc.), an optical disk (CD-ROM, CD-R, CD-RW, DVD-ROM, DVD±R, DVD±RW, Blu-ray (registered trademark) Disc, etc.), a semiconductor memory, or a similar type of recoding medium. Any recording format may be employed as long as the format is readable in a computer or an embedded system. The same operation as that of the detection apparatus of the above-described embodiment may be realized when the computer reads the program from the recording medium and the instructions described in the program is executed by the CPU based on the program. It is a matter of course that the computer may acquire and read the program through a network. In addition, an OS (operation system) running on the computer, a database management software, an MW (middleware) such as a network may perform some of the respect processes based on the instruction of the program stored in the computer or the embedded system from the recording medium for realizing this embodiment. Furthermore, the recording medium in this embodiment is not limited to a medium independent from the computer or the embedded system, and may be a recording medium which downloads the program transferred through a LAN or the Internet, and stores or temporarily stores the program. In addition, the number of recording mediums is not limited to "1". Even a case where the process in this embodiment is performed from a plurality of recording mediums is also included in the case of the recording medium in this embodiment, and any configuration of the medium may be employed.

Further, the computer or the embedded system in this embodiment performs the respective processes in this embodiment based on the program stored in the recording medium, and may be configured by any one of a device such as a personal computer or a microcomputer and a system where a plurality of devices are connected through a network. In addition, the computer in this embodiment is not limited to the personal computer, and includes an arithmetic processing device included in an information processing apparatus, and a microcomputer. The computer in this embodiment collectively refers to an apparatus or a device which can realize the functions in this embodiment by a program.

The present invention is not limited to the above-described embodiment, and various modifications can be made in practice without departing from the spirit and scope of the invention. In addition, the embodiments may be appropriately combined as much as possible, and in such a case, the combined effect can be obtained. Furthermore, the above-described embodiments include various stages of the invention, and various inventions can be extracted by suitably combining structural elements disclosed herein.

### REFERENCE SIGNS LIST

10, 30: Terminal
20: Blockchain network
21: Communication medium
25: Public lodger
50: Software certificate authority
100: Information processing apparatus
101: Access control unit
102: Storage unit
103: Signature unit
104: Presentation unit
105: Transmission unit
106: Generation unit
120: Secure element area
140: Operating system area (OS area)
160: Application area
701: Display screen
910: Secure element
920: First processing circuitry
911: Memory
912: Second processing circuitry

## Claims

1. An information processing apparatus to be mounted on a terminal, **characterized by** comprising:
access control means for, when a transaction is generated by software that operates on an operating system of the terminal, determining whether or not the software that has generated the transaction is authorized software; and
signature means for affixing a first digital signature to the transaction using a private key stored in a secure element of the terminal only when the access control means determines that the software that has generated the transaction is the authorized software.

2. The information processing apparatus according to claim 1, **characterized in that** the access control means stops processing of the transaction when the access control unit determines that the software that has generated the transaction is not authorized software.

3. The information processing apparatus according to claim 1 or 2, **characterized by** further comprising
storage means for storing, in the secure element, a signature verification key related to software authorized by a certificate authority, **characterized in that**
the access control means determines whether or not the software that has generated the transaction is the authorized software by verifying a second digital signature affixed to the software using the signature verification key.

4. The information processing apparatus according to any one of claims 1 to 3, **characterized by** further comprising presentation means for presenting details about the transaction to a user, **characterized in that**
the access control means determines whether or not software used to display the details about the transaction affixed with the digital signature is the authorized software.

5. The information processing apparatus according to any one of claims 1 to 4, **characterized by** further comprising transmission means for broadcasting the transaction affixed with the first digital signature to a peer-to-peer (P2P) network using blockchain technology.

6. The information processing apparatus according to claim 3, **characterized by** further comprising generation means for generating a pair of a public key and the private key, **characterized in that** the storage means stores the private key.

7. The information processing apparatus according to claim 6, wherein the pair of the public key and the private key is generated for each type of virtual currency.

8. The information processing apparatus according to any one of claims 1 to 7, wherein the transaction is an instruction related to a virtual currency transaction.

9. An information processing method executing on a terminal, **characterized by** comprising:
determining whether or not the software that has generated the transaction is authorized software when a transaction is generated by software that operates on an operating system of the terminal, and
affixing a first digital signature to the transaction using a private key stored in a secure element of the terminal only when the access control means determines that the software that has generated the transaction is the authorized software.

10. An information processing program configured to cause a computer to implement a method of:
determining whether or not the software that has generated the transaction is authorized software when a transaction is generated by software that operates on an operating system of the terminal, and
affixing a first digital signature to the transaction using a private key stored in a secure element of the terminal only when the access control means determines that the software that has generated the transaction is the authorized software.

11. An information processing program configured to cause a computer to implement:
a function of, when a transaction is generated by software that operates on an operating system, determining whether or not the software that has generated the transaction is authorized software; and
a function of providing an instruction for a first digital signature to a secure element when the software that has generated the transaction is determined the authorized software.

12. An information processing apparatus, **characterized by** comprising:
first processing circuitry configured to generate a transaction by executing software that operates on an operating system and determine whether or not the software is authorized software in response to the generation of the transaction; and
a secure element including a memory to store a private key and second processing circuitry configured to affix a first digital signature to the transaction using the private key only when it is determined that the software is the authorized software.
